# EUROPÄISCHE PATENTSCHRIFT

(11) **EP 2 718 696 B1**
(45) Veröffentlichungstag und Bekanntmachung des Hinweises auf die Patenterteilung: **08.01.2020**
(21) Anmeldenummer: 12718087.5
(22) Anmeldetag: 02.05.2012
(51) Int. Cl.: G01N 21/90

(54) **LEERFLASCHENINSPEKTION**
INSPECTION OF EMPTY BOTTLES
INSPECTION DE BOUTEILLES VIDES

(30) Priorität: 10.06.2011 DE 102011106136
(43) Veröffentlichungstag der Anmeldung: 16.04.2014
(73) Patentinhaber: KHS GmbH, 44143 Dortmund (DE)
(72) Erfinder: HERRMANN, Marius Michael, 57520 Rosenheim (DE); WIEMAR, Heinrich, 21033 Hamburg (DE); SCHORN, Wolfgang, 53506 Hönningen (DE); HERRMANN, Jürgen, 57520 Rosenheim (DE)
(86) Internationale Anmeldenummer: PCT/EP2012/001895
(87) Internationale Veröffentlichungsnummer: WO 2012/167860

(56) Entgegenhaltungen:
- WO-A1-2005/103605
- US-A1- 2004 150 815
- US-A1- 2006 126 060
- US-B2- 7 477 374
- US-B2- 7 911 602

## Beschreibung

Die Erfindung betrifft eine Inspektionsvorrichtung zum Kontrollieren von Flaschen oder dergleichen Behälter, umfassend zumindest eine Beleuchtungseinheit und zumindest eine Kamera, wobei die zumindest die Beleuchtungseinheit oberhalb der zu inspizierenden Flasche angeordnet ist. Die Erfindung betrifft aber auch ein Verfahren zur Leerflascheninspektion, insbesondere eines Mündungsbereiches der Flasche mit der Inspektionsvorrichtung.

Derartige Flaschen oder dergleichen Behälter können für Flüssigkeiten, beispielsweise für Getränke verwendet werden. Die Behälter können aus einem transparenten oder transluzenten Material, beispielsweise aus Glas oder aus einem transluzenten Kunststoff, z.B. PET bestehen, Insbesondere Glasflaschen können unterschiedliche Färbungen aufweisen, wobei z.B. braune und grüne aber auch blaue Flaschenfarben lediglich beispielhaft erwähnt werden. Die Flaschen oder dergleichen Behälter werden im Leerzustand bevorzugt nach ihrer Reinigung auf einem Transporteur an der Inspektionsvorrichtung vorbeigeführt. Bekannt ist, dass Flaschen auch mit so genannten Kronkorken oder anderen oxidierbaren Verschlusselementen verschlossen werden können. Dabei ist es möglich, dass z.B. der Kronkorken oxidierte und sich so Rost des nicht mehr vorhandenen Kronkorkens oder des anderen oxidierbaren Verschlusselementes an dem Mündungsbereich der Flasehe abgelagert hat. Wird mit der Inspektionsvorrichtung abgelagerter Rost erkannt, obwohl die Leerflasche die Reinigungsvorrichtung passiert hat, wird die betreffende Flasche an geeigneter Stelle aus dem Flaschestrom ausgeschleust, und entweder vernichtet oder dem Flaschenstrom vor der Reinigungsanlage erneut zugeführt.

Üblicherweise sendet die Beleuchtungseinheit ein Licht gleichen Spektrums, also in gleicher Farbe aus, weswegen die Inspektionseinrichtung bei Flaschen unterschiedlicher Farbegestaltung ein nicht immer gesichertes Inspektionsergebnis erzielt. So kann es sein, dass eine Flasche trotz noch vorhandener Rostablagerung die Inspektionsvorrichtung und die nach geschaltete Ausschleusvorrichtung als GUT-Flasche passiert, obwohl die betreffende Flasche aufgrund der vorhandenen Verschmutzung eigentlich aussortiert werden sollte. Gelangt eine solche in den weiteren Produktionsprozess, kann dies zu Produktausfällen führen, da das eingefüllte Produkt aus hygienischer Sicht aufgrund des möglichen Kontaktes mit der Verschmutzung nicht einwandfrei ist. Gelangt eine solche Flasche zum Verbraucher kann zudem ein erheblicher Schaden für den Hersteller des Produktes bzw. den Anlagehersteller entstehen.

Aus der US 2004/010815 A1 sind eine kontinuierlich arbeitende Vorrichtung und ein Verfahren zur Mündungsinspektion von Flaschen bekannt. Hierbei wird über einen oberen Beleuchtungsdom und einen tieferliegenden Beleuchtungskranz farblich unterschiedliches Licht gerichtet eingestrahlt, von einer Farbkamera erfasst und die Daten geeignet ausgewertet. US 7,477,374 B2 offenbart ebenfalls ein solches Inspektionssystem für Behältermündungen, wobei hier diffuses Licht einer Lichtquelle senkrecht von oben über geeignete Spiegel auf die Mündung geleitet wird. Dabei wird vorgeschlagen, die Mündung ggf. zeitgleich mit unterschiedlichem Licht, bspw. rot und grün anzublitzen und diese Lichtarten physikalisch durch die Spiegelanordnung voneinander zu trennen. Schließlich zeigt die US 7,911,602 B2 eine Inspektionsvorrichtung für Verschlüsse und zur Dekorerfassung, wobei auch hier vorgeschlagen wird, Licht mit unterschiedlichen Farben vorzusehen. Weiterhin ist aus der US 2006/0126060 A1 eine Inspektionsvorrichtung für Behältermündungen bekannt, bei der radial beabstandete Lichtquellenringe jeweils konzentrisch um einen Mittelpunkt der Lichtquellenplatine angeordnet sind, wobei diese Lichtquellenringe kranzweise zugeschaltet werden können.

Der Erfindung liegt daher die Aufgabe zugrunde, eine Inspektionsvorrichtung, aber auch ein Inspektionsverfahren der Eingangs genannten Art mit einfachen Mitteln so zu verbessern, dass die vorgenannten Nachteile bei einer Inspektion der Behälter bzw. der Flaschen, insbesondere bei Flaschen unterschiedlicher Einfärbung vermieden sind.

Erfindungsgemäß wird der vorrichtungstechnische Teil Aufgabe durch eine Inspektionsvorrichtung mit den Merkmalen des Anspruchs 1 gelöst, wobei die Lösung des verfahrenstechnischen Teils der Aufgabe mit einem Inspektionsverfahren mit den Merkmalen des Anspruchs 8 gelingt.

Vorgeschlagen wird eine Inspektionsvorrichtung zum Kontrollieren von Flaschen oder dergleichen Behälter, umfassend zumindest eine Beleuchtungseinheit und zumindest eine Kamera, wobei die zumindest eine Beleuchtungseinheit oberhalb der zu inspizierenden Flasche angeordnet ist. Zielführend ist, dass die Beleuchtungseinheit als Lichtquellenplatine ausgeführt ist, deren Lichtquellen zumindest farblich und/oder in seiner jeweiligen Intensität, an eine im Bereich der Flaschenmündung festgestellte Flaschenfarbe, veränderbares Licht emittieren, wobei die Lichtquellen in radial beabstandeten Reihen, also in Lichtquellenringen jeweils konzentrisch um einen Mittelpunkt der Lichtquellenplatine angeordnet sind, und emittiertes Licht zumindest teilweise in das innere der Flaschenmündungswand eingekoppelt wird.|

Zweckmäßiger Weise sind die Lichtquellen als LED ausgeführt, welche jeweils Licht eines gemeinsamen Lichtraumes emittieren. Beispielhaft können die LEDs Licht des RGB-Lichtraumes (Rot-Grün-Blau) emittieren, was natürlich nicht beschränkend sein soll.

Günstig ist auch, wenn die Lichtquellenplatine eine Steuer- und Auswerteeinheit aufweist, bzw. mittels einer Steuer- und Auswerteeinheit angesteuert wird, so dass die einzelnen konzentrischen Reihen an Lichtquellen, also die einzelnen Lichtquellenringe ansteuerbar sind. Zweckmäßig ist auch, wenn zudem einzelne Lichtquellen einer jeweiligen konzentrischen Reihe, also im jeweiligen Lichtquellenring separat ansteuerbar sind. Mit dieser Maßnahme kann auf der Lichtquellenplatine ein jeweils gewünschtes und stets veränderbares Lichtmuster auch unterschiedlichster Intensität, insbesondere farbmoduliert erzeugt werden. Zweckmäßig ist, wenn die Beleuchtungseinheit, also die Lichtquellenplatine stroboskopisch angesteuert wird, also aufblitzt, bevorzugt farbmoduliert und/oder Intensitätsmoduliert aufblitzt, wenn eine zu inspizierende Flasche im Inspektionsbereich ist.

Wie bereist erwähnt, wird ein Teil des emittierten Lichts in das innere der Flaschenmündungswand eingekoppelt. Ein anderer Teil des emittierten Lichts kann auf den Außenumfang der Flaschenmündung gerichtet sein, um diesem etwas aufzuhellen.

Der Mündungsbereich der Flasche weist eine außenumfänglich angeordnete, konkave Einziehung unterhalb der Mündung auf, an welcher sich Rost bevorzugt ablagert. Zweckmäßig ist daher, wenn das emittierte Licht an einer solchen geeigneten Stelle des Innenumfangs der Flaschenmündung eingekoppelt wird, dass das Licht an dem zu inspizierenden Bereich wieder austritt, so dass also z.B. der konkaven Einziehung sicher inspizierbar ist. Zusätzlich sollte das auf den Außenumfang strahlende Licht ebenso gerichtet sein, um den zu inspizierenden Bereich, bevorzugt die konkave Einziehung zu erhellen.

Wird das Licht in den Innenumfang des Flaschenmündungsbereiches, also von innen in die Mündungswand eingekoppelt, und tritt am Außenumfang wieder aus diesem aus, wird vorteilhaft eine Inspektion mit Durchlicht durchgeführt. Selbstverständlich wird das Licht in seinem Strahlengang entsprechend physikalischer Gesetze beim Eintritt in das Glasmaterial aber auch beim Austritt aus dem Glas gebrochen, was bei dem gerichteten Einkoppeln beachtet werden sollte, um den zu inspizierenden Bereich mit dem erforderlichen Licht durchleuchten zu können. Insofern wird die Lichtquellenplatine zudem gerichtetes Licht emittieren. Bei dem Vorgehen, den Mündungsbereich, bevorzugt die konkave Einziehung von außen zu erhellen, wird die Auflicht-Erhellung durchgeführt. Mit der Erfindung sind also Durchlicht und Auflicht gegebenenfalls kombinierbar.

Zweckmäßig ist, wenn auch die zumindest eine Kamera oberhalb der zu inspizierenden Flasche angeordnet ist. Vorteilhaft im Sinne Erfindung ist auch, wenn die Kamera an den Farbraum der Lichtquellen angepasst ist, also z.B. einen Farbfilter aufweist, welcher an den Farbraum der Lichtquellen angepasst ist. Beispielsweise könnte die zumindest eine Kamera also auch als RGB-Kamera bezeichnet werden.

Um den Flaschenmündungsbereich mit der oberhalb der Flasche angeordneten Kamera, auf Rostablagerungen inspizieren zu können ist es sinnvoll, wenn zumindest ein erstes, optisches Element vorgesehen wird, welches ein Abbild, bzw. Spiegelbild des Flaschenmündungsbereiches an die zumindest eine Kamera leitet. Das optische Element kann als Spiegel ausgeführt sein, und ist in jeweiliger Ausführung in der Inspektionstechnik von Leerflaschen allgemein bekannt. Die Kamera kann natürlich auch seitlich zur Flasche und/oder auf Flaschenhöhe und/oder unterhalb der Flasche angeordnet sein.

Zielführend ist auch, wenn mehrere erste optische Elemente vorgesehen sind, um eine Rundumabbildung des Flaschenmündungsbereiches zu erhalten. Bevorzugt sind deshalb vier optische Elemente vorgesehen, welche jeweils einen bestimmten Flaschenmündungsabschnitt zur Kamera hin abbilden, wobei jeweils Überschneidungen jeweils benachbarter Abbildungen möglich sind. Die vier Teilabbildungen können in einer Auswerte- und Steuer- und Auswerteeinheit zusammengesetzt bzw. ausgewertet werden.

Die Kamera kann mit ihrer optischen Achse bevorzugt quer, weiter bevorzugt senkrecht zur Flaschenhochachse angeordnet sein, so dass die Inspektionseinrichtung noch zusätzlich zu den ersten optischen Elementen zweite und dritte optische Elemente aufweisen kann, welche die genannten Abbildungen zur Kamera spiegeln.

Mit der Erfindung werden so auch Rostablagerungen bzw. feine Rostflecken aufgrund der hochsensiblen Erfassung bzw. Auswertung detektierbar. Hierzu wird ein an die Flaschenfarbe angepasstes Licht, also farbmoduliertes Licht von den Lichtquellen emittiert, wobei in der Steuer- und Auswerteeinheit, welche wie erwähnt mit der Kamera in Verbindung steht, Soll-Daten, also Soll-Farben mit Ist-Daten, also mit Ist-Farben des Inspektionsbereiches verglichen bzw. ausgewertet werden. Die Soll-Daten sind in der Steuer- und Auswerteeinheit hinterlegt. Zusätzlich kann auch die modulierbare Lichtintensität im Inspektionsbereich gemessen werden. Zielführend ist aber auch, wenn die in konzentrischen Lichtquellenringen angeordneten Lichtquellen ringweise, ringabschnittsweise und/oder einzeln angesteuert werden, wobei auch eine farbvariabilität und eine jeweils gewünschte Lichtintensität steuerbar ist.

Günstiger Weise wird bei der Erfindung also farblich und/oder auch in seiner Intensität angepasstes Durchlicht mit der Lichtraum-Kamera Erfassung kombiniert. Insbesondere wird die Lichtfarbe des zu emittierenden Lichtes an die Flaschenfarbe bzw. an die Glasfarbe angepasst. Beispielsweise wurde gefunden, dass Licht mit einem überwiegend grün/blauen Lichtanteil bei braunen Flaschen weniger geeignet ist, so dass das zu emittierende Licht in seinem Rotanteil erhöht wird, was die Transmission verbessert. Zweckmäßig ist also, zunächst die Glasfarbe zu detektieren, um mit dem Steuergerät die Lichtquellenplatine bzw. die einzelnen Lichtquellen so anzusteuern, dass jeweils das günstigste Inspektionslicht (farbmoduliert, intensitätsmoduliert, gerichtet zum korrekten Inneneinkoppeln) für die betreffende Glasfarbe emittiert wird.

Selbstverständlich kann der Erfindungsgedanke mit dem sich anpassenden Licht auch an andere Inspektionsaufgaben übertragen werden, so dass die beispielhafte Rosterkennung nur beispielhaft, und keineswegs beschränkend sein soll.

Weitere vorteilhafte Ausgestaltungen der Erfindung sind in den Unteransprüchen und der folgenden Figurenbeschreibung offenbart. Es zeigen
- Fig. 1: einen prinzipiellen Aufbau der Inspektionsvorrichtung,
- Fg. 2: eine vergrößerte Darstellung einer Beleuchtungseinheit, und
- Fig. 3: eine erfindungsgemäße Inspektionsvorrichtung in Seitenansicht.

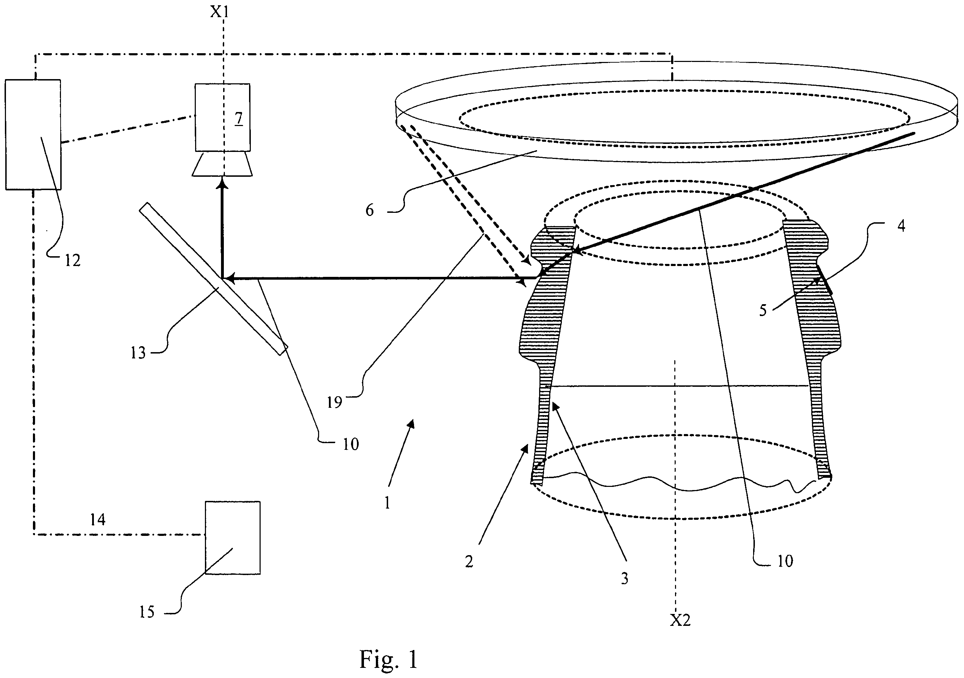

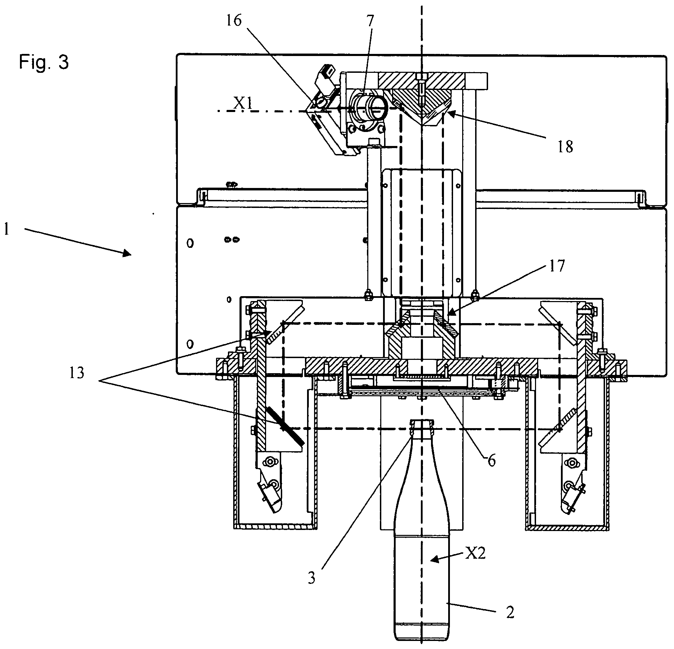

In den unterschiedlichen Figuren sind gleiche Teile stets mit denselben Bezugszeichen versehen, weswegen diese in der Regel auch nur einmal beschrieben sind. In den Figuren 1 und 3 sind optische Strahlengänge der Spiegelbilder gestrichelt und nicht gesondert mit Bezugszeichen versehen.

Figur 1 zeigt eine Inspektionsvorrichtung 1 zur Kontrolle von Flaschen 2 oder dergleichen Behälter. Im nachfolgenden werden Flaschen 2 oder dergleichen Behälter allgemein als Flasche 2 bezeichnet. Die Flasche 2 kann aus einem transparenten oder transluzenten Material, bevorzugt aus Glas oder aus einem transluzenten Kunststoff, z.B. PET bestehen. Das Material bzw. das Glas der Flasche kann z.B. blau, grün oder braun sein, um nur einige Beispiele zu nennen.

Die Flasche 2 weist einen Boden und eine Seitenwand auf. Gegenüberliegend zum Boden ist eine Flaschenmündung 3 angeordnet. Mit der Inspektionsvorrichtung 1 soll bevorzugt die Flaschenmündung 3 der Flasche 2 bevorzugt nach ihrer Reinigung z.B. auf Verschmutzungen wie z.B. Rostablagerungen 4 kontrolliert werden.

Insofern kann auch von einer Leerflascheninspektion zur Rosterkennung gesprochen werden.

Die Rostablagerungen 4 können von Kronkorken stammen, mit welchen die Flasche 2 verschlossen war. Derartige Rostablagerungen 4 sammeln sich bevorzugt an einer konkaven Einziehung 5 am Flaschenhals.

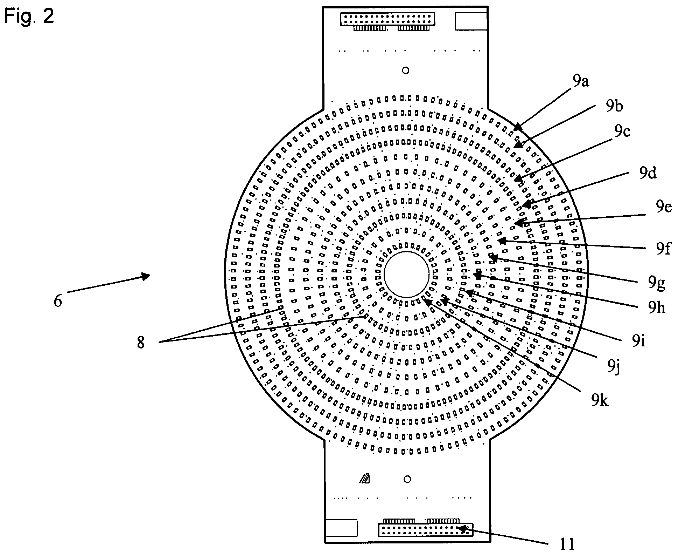

Die Inspektionsvorrichtung 1 weist zumindest eine Beleuchtungseinheit 6 und zumindest eine Kamera 7 auf, wobei die zumindest eine Beleuchtungseinheit 6 oberhalb der zu inspizierenden Flasche 2 angeordnet ist. Die Beleuchtungseinheit 6 ist als Lichtquellenplatine 6 (Figur 2) ausgeführt ist, deren Lichtquellen 8 farblich und/oder in seiner jeweiligen Intensität, an eine im Bereich der Flaschenmündung 3 festgestellte Flaschenfarbe, veränderbares Licht emittieren, wobei die Lichtquellen 8 in radial beabstandeten Lichtquellenringen 9 jeweils konzentrisch um einen Mittelpunkt der Lichtquellenplatine 6 angeordnet sind, und emittiertes Licht 10 zumindest teilweise in das innere der Flaschenmündungswand eingekoppelt wird.

Die Beleuchtungseinheit 6 bzw. die Lichtquellenplatine 6 ist in Figur 2 deutlicher dargestellt. Erkennbar sind die konzentrischen Lichtquellenringe 9 mit jeweiligen Lichtquellen 8. Lediglich Beispielhaft sind elf Lichtquellenringe 9a bis 9k (Die Bezeichnung ist von außen nach innen gewählt) auf der Lichtquellenplatine 6 angeordnet. In dem jeweiligen Lichtquellenring 9a bis 9k sind die benachbarte Lichtquellen 8 in Umfangsrichtung gesehen beispielhaft jeweils gleich beabstandet. Wie erkennbar, sind die Lichtquellenabstände der jeweiligen Lichtquellenringe aber unterschiedlich ausführbar. Beispielsweise weisen die Lichtquellenringe 9a bis 9d und 9k und 9i einen kleineren Lichtquellenabstand auf als die Lichtquellenringe 9e bis 9h und 9j auf, was natürlich nur beispielhaft und keineswegs einschränkend zu verstehen ist. Denkbar sind jegliche Lichtquellenabstände in den jeweiligen Lichtquellenringen. Auch sind mehr oder weniger als elf Lichtquellenringe 9 denkbar. Abweichend von der ringweisen Anordnung der Lichtquellen 8, kann natürlich jedes erdenkliche Muster mit den Lichtquellen 8 auf der Lichtquellenplatine 6 angeordnet werden. Denkbar ist zum Beispiel ein Kreuzmuster.

Die Lichtquellenplatine 6 weist Anschlüsse 11 für eine Steuer- und Auswerteeinheit 12 auf. Die Lichtquellen 8 sind bevorzugt als LEDs ausgeführt, welche Licht unterschiedlicher Farbe und unterschiedlicher Intensität emittieren können. Über die Steuer- und Auswerteeinheit 12 sind die Lichtquellen 8 der Lichtquellenplatine 6 ansteuerbar. Vorteilhaft sind die Lichtquellen 8 der einzelnen Lichtquellenringe 9 ringweise, ringabschittsweise und/oder einzeln ansteuerbar. Günstiger Weise ist es möglich die Lichtquellen 8 so anzusteuern, dass Licht angepasster Farbe und angepasster Intensität von der Beleuchtungseinheit 6 emittierbar ist, wobei das zu emittierende Licht insbesondere an die jeweilige Glasfarbe angepasst ist. Insbesondere ist es möglich, die Intensität des zu emittierenden Lichtes an unterschiedlichen Bereichen der Lichtquellenplatine 6 unterschiedlich zu steuern. Möglich ist natürlich eine solche Ansteuerung, dass Lichtmuster emittiert werden.

Wie in Figur 1 erkennbar, wird emittiertes Licht 10 in den Innenumfang der Flaschenmündung 3 bzw. der inneren Glaswand eingekoppelt, wobei der Außenumfang des zu inspizierenden Bereiches mit Licht 19, welches ebenfalls aus der Beleuchtungseinheit 6 emittiert wird, angestrahlt wird. Günstig ist, dass hier, wie oben erwähnt, unterschiedliche Lichtintensitäten steuerbar sind, so dass der Außenumfang von dem Licht 19 lediglich erhellt wird, wobei das Licht 10, welches gerichtet ist und eingekoppelt wird eine größere Intensität haben kann. Insofern ist mit der Erfindung und mit einer einzigen Beleuchtungseinheit 6, die Durchlichtinspektion und die Auflichterhellung durchführbar.

In Figur 3 ist noch ein erstes optisches Element 13 erkennbar. Das erste optische Element 13 bildet einen Umfangsabschnitt des zu inspizierenden Bereiches ab, so dass von der Kamera 7 ein Spiegelbild des zu inspizierenden Bereiches aufnehmbar ist. Die Kamera 7 leitet das Spiegelbild als Ist-Daten an die Steuer- und Auswerteeinheit 12, welche auch als Steuer- und Auswerteeinheit 12 bezeichnet werden kann, im Folgenden und zuvor aber lediglich als Steuer- und Auswerteeinheit 12 bezeichnet wird. In der Steuer- und Auswerteeinheit 12 bzw. in deren Auswerteteil sind Soll-Daten abgelegt, welche mit den von der Kamera 7 erhaltenen Ist-Daten vergleichbar sind. Da das emittierte Licht in seinen Farbanteilen an die Flaschenfarbe angepasst ist, ist zweckmäßig vorgesehen, in der Steuer- und Auswerteeinheit 12 einen Abgleich der Ist-Farben mit den Soll-Farben durchzuführen. Werden Abweichung oberhalb festgelegter Grenzwerte detektiert, also werden Rostablagerungen 4 detektiert, wird ein Ausschleussignal 14 an eine Ausschleusstation 15 geleitet, welche die betreffende Flasche 2 aus dem Flaschenstrom ausschleust.

Um ein umfängliches Abbild des zu inspizierenden Bereiches erreichen zu können, ist vorteilhaft vorgesehen, mehrere erste optische Elemente 13, beispielsweise vier erste optische Elemente 13 vorzusehen, welche jeweils einen anderen Umfangsbereich abbilden, wobei Überlappungen benachbarter Umfangsbereiche nicht schädlich sind. Die vier Teilabbildungen werden in der Steuer- und Auswerteeinheit 12 zu einem Gesamtbild zusammengesetzt, wobei natürlich auch eine Auswertung der jeweils einzelnen Teilabbildungen denkbar ist. Denkbar ist auch eine Ausgestaltung, bei welcher die Flasche 2 rotiert, also rotierend inspiziert wird, so dass eine umfangsmäßige Anordnung der ersten optischen Elemente 13 entfallen, und lediglich ein einziges optisches Element 13 ausreichend sein kann.

Die Lichtquellen 8 emittieren jeweils Licht gleichen Farbraums. Sinnvoll ist daher auch die Kamera 7 so auszuführen, dass diese an diesen Farbraum angepasst ist. Beispielhaft können die Lichtquellen 8 Licht des RGB-Farbraums (Rot-Grün-Blau) emittieren, weshalb die Kamera 7 auch als RGB-Kamera ausgeführt sein sollte. Möglich ist die Zuordnung eines entsprechenden Farbfilters 16 zur Kamera 7, welcher in Figur 3 angedeutet ist.

Wie in Figur 1 erkennbar, ist die Kamera 7 mit ihrer optischen Achse X1 parallel zur Flaschenhochasche X2, aber seitlich zu dieser versetzt angeordnet. Die Kamera 7 kann oberhalb der Flaschenmündung 3 angeordnet sein. Im Unterschied dazu ist die Kamera 7 bei dem Ausführungsbeispiel zu Figur 3 mit ihrer optischen Achse X1 quer, bevorzugt senkrecht zur Flaschenhochachse X2 oberhalb der zu inspizierenden Flasche 2 angeordnet. Erkennbar sind in Figur 3 auch die vier ersten optischen Elemente 13, welche jeweils einen anderen Umfangsbereich des zu inspizierenden Bereiches abbilden.

Da die Kamera 7 mit ihrer optischen Achse X1 quer zur Flaschenhochachse X2 angeordnet ist, bedarf es einer Umlenkung der Abbildungen, welche von den ersten optischen Elementen 13 aufgenommen werden, was mittels zweiter und dritter optischer Elemente 17 und 18 erreicht wird. Hierauf braucht nicht näher eingegangen werden.

Zielführend ist bei der Erfindung, dass die Beleuchtungseinheit 6, also die Lichtquellenplatine 6 an die jeweilige Flaschenfarbe angepasstes Licht, also farbmoduliertes Licht emittiert, so dass eine sichere Inspektion beispielsweise hinsichtlich möglicher Rostablagerungen 4 erfolgen kann. Denkbar sind kranzweise Zuschaltungen der Lichtquellenringe 9, um z.B. gerichtetes Licht zu erreichen. Sinnvoll ist die Durchlicht-Inspektion, in dem emittiertes, farbmoduliertes Licht in die Innenwand der Flaschenmündung 3 eingekoppelt wird, wobei die Durchlicht-Inspektion mit der Auflicht-Erhellung kombinierbar ist. Die physikalischen Brechungen des eintretenden und austretenden Lichts sind in Figur 1 erkennbar, wobei das gerichtete, farbmodulierte Licht so einkoppelbar ist, dass ein Austritt am zu inspizierenden Bereich, also bevorzugt im bereich der konkaven Einziehung 5 sichergestellt ist.

### Bezugszeichenliste

- 1: Inspektionsvorrichtung
- 2: Flasche
- 3: Flaschenmündung
- 4: Rostablagerung
- 5: Konkave Einziehung
- 6: Beleuchtungseinheit/Lichtquellenplatine
- 7: Kamera
- 8: Lichtquelle
- 9: Lichtquellenringe
- 10: Emittiertes, einzukoppelndes Licht
- 11: Anschlüsse an 6
- 12: Steuer- und Auswerteeinheit
- 13: Erstes optisches Element
- 14: Ausschleussignal
- 15: Ausschleusstation
- 16: Farbfilter
- 17: Zweites optisches Element
- 18: Drittes optisches Element
- 19: Licht auf Außenumfang gerichtet

## Patentansprüche

1. Inspektionsvorrichtung zum Kontrollieren von Flaschen (2) oder dergleichen Behälter, welche zumindest eine Beleuchtungseinheit (6) und zumindest eine Kamera (7) und eine Steuer- und Auswerteeinheit (12) aufweist, wobei zumindest die Beleuchtungseinheit (6) oberhalb einer zu inspizierenden Flasche (2) bzw. des Transportweges einer zu inspizierenden Flasche (2) angeordnet ist, wobei die Beleuchtungseinheit (6) als Lichtquellenplatine (6) ausgeführt ist, deren Lichtquellen (8) zumindest farblich, an eine im Bereich einer Flaschenmündung (3) festgestellte Flaschenfarbe, veränderbares Licht emittieren und die Kamera (7) eine farbsensitive Kamera ist, insbesondere eine RGB-Kamera, wobei die Lichtquellen (8) in radial beabstandeten Lichtquellenringen (9) jeweils konzentrisch um einen Mittelpunkt der Lichtquellenplatine (6) angeordnet sind, und emittiertes Licht zumindest teilweise in das Innere der Flaschenmündungswand einkoppelbar ist und wobei die Beleuchtungseinheit 6 derart ist, dass eine kranzweise Zuschaltung der Lichtquellenringe 9 erfolgen kann, **dadurch gekennzeichnet, dass** die Beleuchtungseinheit (6) in seiner Intensität veränderbares Licht emittiert.

2. Inspektionsvorrichtung nach einem der vorhergehenden Ansprüche, **dadurch gekennzeichnet, dass** die Lichtquellen (8) als LEDs ausgeführt sind, aus welchen farbmoduliertes und/oder Intensitätsmoduliertes Licht gerichtet emittierbar ist.

3. Inspektionsvorrichtung nach einem der vorhergehenden Ansprüche, **dadurch gekennzeichnet, dass** die Beleuchtungseinheit (6) eine Steuer- und Auswerteeinheit (12) zumindest zum Ansteuern der in Lichtquellenringen (9) angeordneten Lichtquellen (8) aufweist, wobei die Lichtquellen (8) einzeln oder in Gruppen stroboskopisch ansteuerbar sind.

4. Inspektionsvorrichtung nach einem der vorhergehenden Ansprüche, **dadurch gekennzeichnet, dass** die Lichtquellen (8) in jeweiligen Lichtquellenringen (9) so angeordnet sind, dass benachbarte Lichtquellen (8) des betreffenden Lichtquellenringes (9) jeweils einen gleichen Abstand aufweisen.

5. Inspektionsvorrichtung nach einem der vorhergehenden Ansprüche, **dadurch gekennzeichnet, dass** die Kamera (7) oberhalb der Flaschenmündung (3) angeordnet ist.

6. Inspektionsvorrichtung nach einem der vorhergehenden Ansprüche, **dadurch gekennzeichnet, dass** zumindest ein erstes optisches Element (13) vorgesehen ist, welches ein Abbild des zu inspizierenden Bereiches zur Kamera (7) spiegelt.

7. Inspektionsvorrichtung nach einem der vorhergehenden Ansprüche, **dadurch gekennzeichnet, dass** mehrere erste optische Elemente (13) vorgesehen sind, um eine Rundumabbildung zur Kamera (7) zu spiegeln.

8. Verfahren zum Kontrollieren von Flaschen (2) oder dergleichen Behälter mit einer Inspektionsvorrichtung (1) nach einem der vorhergehenden Ansprüche, wobei die zumindest eine Beleuchtungseinheit (6) oberhalb der zu inspizierenden Flasche (2) angeordnet ist, wobei die Beleuchtungseinheit (6) von einer Steuer- und Auswerteeinheit (12) gesteuert zumindest farbmodulierbares Licht emittiert, wobei in einem ersten Schritt die Farbe bzw. die Farbmischung der Beleuchtungseinheit (6) bzw. der jeweiligen Lichtquellen (8) an die Farbe einer zu inspizierender Flasche (2) für eine maximale Lichttransmission angepasst wird, und wobei in mindestens einen nachfolgenden Schritt der Inspektion, das Licht durch die offene Mündung der Flasche (2) auf die innere Oberfläche der Flasche gerichtet ist und der austretende, transmittierte Anteil des Lichtes direkt oder indirekt mittels der mindestens einen Kamera (7) erfasst wird, **dadurch gekennzeichnet, dass** die Beleuchtungseinheit in seiner Intensität veränderbares Licht emittiert.

9. Verfahren nach Anspruch 8, **dadurch gekennzeichnet, dass** der erste Schritt der Anpassung der Farbe bzw. der Farbmischung der Beleuchtungseinheit (6) bzw. der jeweiligen Lichtquellen (8) an die Farbe einer zu inspizierenden Flasche (2) oder Gruppe von Flaschen (2) einmalig vor einer von Inspektionsschritten vorgenommen wird.

10. Verfahren nach Anspruch 8 oder 9, **dadurch gekennzeichnet, dass** die Beleuchtungseinheit (6) als Lichtquellenplatine (6) mit Lichtquellen (8) ausgeführt ist, die in Lichtquellenringen (9) angeordnet sind, wobei die Lichtquellen (8) von einer Steuer- und Auswerteeinheit (12) ansteuerbar sind, so dass farbmoduliertes und/oder intensitätsmoduliertes Licht gerichtet in einen Innenumfang einer Flaschenmündung (3) einkoppelbar ist.

11. Verfahren nach einem der Ansprüche 8 bis 10, **gekennzeichnet durch** Lichtquellen (8) welche jeweils Licht gleichen Farbraumes emittieren.

12. Verfahren nach einem der Ansprüche 8 bis 11, **dadurch gekennzeichnet, dass** der zu inspizierende Bereich mit Auflicht erhellt wird, wobei das Auflicht aus der Beleuchtungseinheit (6) emittiert wird.

13. Verfahren nach einem der Ansprüche 8 bis 12, **dadurch gekennzeichnet, dass** die Beleuchtungseinheit (6) Lichtquellenringe (9) mit Lichtquellen (8) aufweist, welche ringweise, ringabschnittsweise und/oder einzeln mit der Steuer- und Auswerteeinheit (12) ansteuerbar sind und/oder , die Lichtquellen (8) einzeln oder in Gruppen stroboskopisch ansteuerbar sind.

14. Verfahren nach einem der Ansprüche 8 bis 13 umfassend die Schritte:
a. Erkennen einer Flaschenfarbe,
b. Ansteuern der auf der Beleuchtungseinheit (6) angeordneten Lichtquellen (8) so, dass an die detektierte Flaschenfarbe angepasst farbmoduliertes Licht emittiert wird,
c. Abbilden des zu inspizierenden Bereiches der Flasche (2) in der Kamera (7) unter Zwischenschaltung von zumindest ersten optischen Elementen (13) als Ist-Daten,
d. Weiterleiten der Ist-Daten zu der Steuer- und Auswerteeinheit (12) in welcher Soll-Daten abgelegt sind,
e. Auswerten und Vergleichen der Ist-Daten mit den Soll-Daten in der Steuer- und Auswerteeinheit, und
f. Generieren eines Ausschleussignals wenn eine Abweichung der Ist-Daten zu den Soll-Daten einen vorgebbaren Grenzwert überschreitet.

15. Verfahren nach Anspruch 14, **dadurch gekennzeichnet, dass** in der Steuer- und Auswerteeinheit ein Abgleich zwischen Ist-Farben und Soll-Farben durchgeführt wird, insbesondere zur Detektion von Rostanhaftungen an der Flaschenaußenseite, um gegebenenfalls das Ausschleussignal oder ein sonstiges Steuersignal zu generieren.

## Claims

1. Inspection device for monitoring bottles (2) or similar containers, comprising at least one lighting unit (6) and at least one camera (7) and a control and evaluation unit (12), wherein at least the lighting unit (6) is arranged above a bottle (2) which is to be inspected or the transport bath of a bottle (2) which is to be inspected, wherein the lighting unit (6) is designed as a light source circuit board (6), the light sources (8) of which emit light that can be changed at least in colour to a bottle colour determined in the region of a bottle mouth (3), and the camera (7) is a colour-sensitive camera, in particular an RGB camera, wherein the light sources (8) are arranged in radially spaced light source rings (9), each concentric about a midpoint of the light source circuit board (6), and emitted light can be coupled at least partially into the interior of the bottle mouth, and wherein the lighting unit (6) is of such a nature that rim-type switching of the light source rings (9) can take place, **characterised in that** the lighting unit (6) emits light which can be changed in its intensity.

2. Inspection device according to any one of the preceding claims, **characterised in that** the light sources (8) are designed as LED's, from which colour-modulated and/or intensity-modulated light can be emitted in a directed manner.

3. Inspection device according to any one of the preceding claims, **characterised in that** the lighting unit (6) comprises a control and evaluation unit (12) at least for the actuation of the light sources (8) arranged in light source rings (9), wherein the light sources (8) can be stroboscopically actuated individually or in groups.

4. Inspection device according to any one of the preceding claims, **characterised in that** the light sources (8) are arranged in respective light source rings (9) in such a way that adjacent light sources (8) of the light source ring (9) in each case exhibit the same spacing interval.

5. Inspection device according to any one of the preceding claims, **characterised in that** the camera (7) is arranged above the bottle mouth (3).

6. Inspection device according to any one of the preceding claims, **characterised in that** at least one first optical element (13) is provided, which reflects to the camera (7) an image of the region which is to be inspected.

7. Inspection device according to any one of the preceding claims, **characterised in that** several first optical elements (13) are provided, in order to reflect to the camera (7) an all-round image.

8. Method for monitoring bottles (2) or similar containers, with an inspection device (1) according to any one of the preceding claims, wherein the at least one lighting unit (6) is arranged above the bottle (2) which is to be inspected, wherein the lighting unit (6), controlled by a control and evaluation unit (12) emits at least colour-modulated light, wherein, in a first step, the colour or the colour mixing of the lighting unit (6) or of the respective light sources (8) is adjusted to the colour of a bottle (2) which is to be inspected, for a maximum light emission, and wherein, in at least on following step of the inspection, the light is directed through the open mouth of the bottle (2) onto the inner surface of the bottle, and the emerging transmitted portion of the light is detected directly or indirectly by means of the at least one camera (7), **characterised in that** the lighting unit emits light which can be changed in its intensity.

9. Method according to claim 8, **characterised in that** the first step of the adjustment of the colour or colour mixture of the lighting unit (6) or of the respective light sources (8) to the colour of a bottle (2) or group of bottles (2) to be inspected is carried out once before one of the inspection steps.

10. Method according to claim 8 or 9, **characterised in that** the lighting unit (6) is designed as a light source circuit board (6) with light sources (8), which are arranged in light source rings (9), wherein the light sources (8) can be actuated by a control and evaluation unit (12), such that colour-modulated and/or intensity-modulated light can be coupled in a directed manner into an inner circumference of a bottle mouth (3).

11. Method according to any one of claims 8 to 10, **characterised by** light sources (8) which in each case emit light of a same colour space.

12. Method according to any one of claims 8 to 11, **characterised in that** the region to be inspected is illuminated with direct light, wherein the direct light is emitted from the lighting unit (6).

13. Method according to any one of claims 8 to 12, **characterised in that** the lighting unit (6) comprises light source rings (9) with light sources (8) which can be actuated in ring form, ring section form, and/or individually, by the control and evaluation unit (12), and/or the light sources (8) can be stroboscopically actuated individually or in groups.

14. Method according to any one of claims 8 to 13, comprising the steps:
a. Identifying a bottle colour,
b. actuating the light sources (8) arranged on the lighting unit (6) in such a way that colour-modulated light is emitted which is adapted to the detected bottle colour,
c. imaging the region of the bottle (2) which is to be inspected in the camera (7) with the intermediate arrangement of at least first optical elements (13) as actual data,
d. forwarding of the actual data to the control and evaluation unit (12) in which reference data is stored,
e. evaluating and comparing of the actual data with the reference data in the control and evaluation unit, and
f. generating an extraction signal if a deviation between the actual data and the reference data exceed a predeterminable limit value.

15. Method according to claim 14, **characterised in that** a comparison is carried out in the control and evaluation unit between actual colours and reference colours, in particular for the detection of rust deposits on the bottle outer surfaces, in order, if appropriate, to generate the extraction signal or another control signal.

## Revendications

1. Dispositif d'inspection servant à contrôler des bouteilles (2) ou des contenants similaires, lequel présente au moins une unité d'éclairage (6) et au moins une caméra (7) et une unité de commande et d'évaluation (12), dans lequel au moins l'unité d'éclairage (6) est disposée au-dessus d'une bouteille (2) à inspecter ou du trajet de transport d'une bouteille (2) à inspecter, dans lequel l'unité d'éclairage (6) est réalisée en tant que platine de sources lumineuses (6), dont les sources lumineuses (8) émettent une lumière dont au moins la couleur peut varier en fonction d'une couleur de bouteille constatée dans la zone d'un goulot de bouteille (3) et la caméra (7) est une caméra sensible à la couleur, en particulier une caméra RVB, dans lequel les sources lumineuses (8) sont disposées dans des anneaux de sources lumineuses (9) radialement espacés respectivement de manière concentrique autour d'un point central de la platine de sources lumineuses (6), et de la lumière émise peut être injectée au moins en partie dans l'intérieur de la paroi de goulot de bouteille, et dans lequel l'unité d'éclairage (6) est telle qu'une activation à la manière d'une couronne des anneaux de sources lumineuses (9) peut avoir lieu, **caractérisé en ce que** l'unité d'éclairage (6) émet une lumière à intensité variable.

2. Dispositif d'inspection selon l'une quelconque des revendications précédentes, **caractérisé en ce que** les sources de lumière (8) sont réalisées en tant que DEL, depuis lesquelles une lumière modulée en couleur et/ou modulée en intensité peut être émise de manière dirigée.

3. Dispositif d'inspection selon l'une quelconque des revendications précédentes, **caractérisé en ce que** l'unité d'éclairage (6) présente une unité de commande et d'évaluation (12) au moins pour piloter les sources lumineuses (8) disposées dans des anneaux de sources lumineuses (9), dans lequel les sources lumineuses (8) peuvent être pilotées individuellement ou en groupes de manière stroboscopique.

4. Dispositif d'inspection selon l'une quelconque des revendications précédentes, **caractérisé en ce que** les sources lumineuses (8) sont disposées dans des anneaux de sources lumineuses (9) respectifs de telle sorte que des sources lumineuses (8) adjacentes de l'anneau de sources lumineuses (9) concerné présentent respectivement un espacement identique.

5. Dispositif d'inspection selon l'une quelconque des revendications précédentes, **caractérisé en ce que** la caméra (7) est disposée au-dessus du goulot de bouteille (3).

6. Dispositif d'inspection selon l'une quelconque des revendications précédentes, **caractérisé en ce qu'**au moins un premier élément (13) optique est prévu, lequel réfléchit une reproduction de la zone à inspecter vers la caméra (7).

7. Dispositif d'inspection selon l'une quelconque des revendications précédentes, **caractérisé en ce que** plusieurs premiers éléments (13) optiques sont prévus pour réfléchir une reproduction panoramique vers la caméra (7).

8. Procédé servant à contrôler des bouteilles (2) ou des contenants similaires avec un dispositif d'inspection (1) selon l'une quelconque des revendications précédentes,
dans lequel l'au moins une unité d'éclairage (6) est disposée au-dessus de la bouteille (2) à inspecter, dans lequel l'unité d'éclairage (6) commandée par une unité de commande et d'évaluation (12) émet au moins une lumière pouvant être modulée en couleur, dans lequel lors d'une première étape, la couleur ou le mélange de couleurs de l'unité d'éclairage (6) ou des sources lumineuses (8) respectives est adapté à la couleur d'une bouteille (2) à inspecter pour une transmission de lumière maximale, et dans lequel lors d'au moins une étape ultérieure d'inspection, la lumière est dirigée à travers le goulot ouvert de la bouteille (2) sur la surface intérieure de la bouteille et la partie transmise sortante de la lumière est détectée directement ou indirectement au moyen de l'au moins une caméra (7), **caractérisé en ce que** l'unité d'éclairage émet une lumière à intensité variable.

9. Procédé selon la revendication 8, **caractérisé en ce que** la première étape d'adaptation de la couleur ou du mélange de couleurs de l'unité d'éclairage (6) ou des sources lumineuses (8) respectives à la couleur d'une bouteille (2) à inspecter ou d'un groupe de bouteilles (2) est réalisée une fois avant une des étapes d'inspection.

10. Procédé selon la revendication 8 ou 9, **caractérisé en ce que** l'unité d'éclairage (6) est réalisée en tant que platine de sources lumineuses (6) avec des sources lumineuses (8), qui sont disposées dans des anneaux de sources lumineuses (9), dans lequel les sources lumineuses (8) peuvent être pilotées par une unité de commande et d'évaluation (12) de sorte que de la lumière modulée en couleur et/ou modulée en intensité peut être injectée de manière dirigée dans une périphérie intérieure d'un goulot de bouteille (3).

11. Procédé selon l'une quelconque des revendications 8 à 10, **caractérisé par** des sources lumineuses (8), lesquelles émettent respectivement de la lumière à espace chromatique identique.

12. Procédé selon l'une quelconque des revendications 8 à 11, **caractérisé en ce que** la zone à inspecter est illuminée avec de la lumière incidente, dans lequel la lumière incidente est émise depuis l'unité d'éclairage (6).

13. Procédé selon l'une quelconque des revendications 8 à 12, **caractérisé en ce que** l'unité d'éclairage (6) présente des anneaux de sources lumineuses (9) avec des sources lumineuses (8), lesquelles peuvent être pilotées à la manière d'un anneau, par sections d'anneau et/ou individuellement avec l'unité de commande et d'évaluation (12), et/ou que les sources lumineuses (8) peuvent être pilotées individuellement ou en groupes de manière stroboscopique.

14. Procédé selon l'une quelconque des revendications 8 à 13, comprenant les étapes :
a. d'identification d'une couleur de bouteille ;
b. de pilotage des sources lumineuses (8) disposées sur l'unité d'éclairage (6) de sorte que de la lumière modulée en couleur est émise de manière adaptée à la couleur de bouteille détectée ;
c. de reproduction de la zone à inspecter de la bouteille (2) dans la caméra (7) en intercalant au moins des premiers éléments (13) optiques en tant que données réelles ;
d. de transfert des données réelles vers l'unité de commande et d'évaluation (12), dans laquelle des données théoriques sont déposées ;
e. d'évaluation et de comparaison des données réelles aux données théoriques dans l'unité de commande et d'évaluation ; et
f. de génération d'un signal d'évacuation quand un écart entre les données réelles et les données théoriques dépasse une valeur limite pouvant être prédéfinie.

15. Procédé selon la revendication 14, **caractérisé en ce qu'**un alignement entre des couleurs réelles et des couleurs théoriques est mis en œuvre dans l'unité de commande et d'évaluation, en particulier pour détecter des adhérences de rouille au niveau du côté extérieur de bouteille pour éventuellement générer le signal d'évacuation ou un autre signal de commande.
